# EUROPÄISCHE PATENTSCHRIFT

(11) **EP 0 889 537 B1**
(45) Veröffentlichungstag und Bekanntmachung des Hinweises auf die Patenterteilung: **02.05.2001**
(21) Anmeldenummer: 97111206.5
(22) Anmeldetag: 03.07.1997
(51) Int. Cl.: H01M 8/24

(54) **Hochtemperatur-Brennstoffzellenanlage**
High-temperature fuel cell installation
Installation de piles à combustible fonctionnant à haute température

(43) Veröffentlichungstag der Anmeldung: 07.01.1999
(73) Patentinhaber: SIEMENS AKTIENGESELLSCHAFT, 80333 München (DE)
(72) Erfinder: Lezuo, Alex, 91083 Baiersdorf (DE)

(56) Entgegenhaltungen:
- EP-A- 0 374 636
- WO-A-95/10126
- WO-A-96/20506
- WO-A-97/31399
- DE-A- 19 548 297
- DE-C- 4 339 405
- US-A- 3 146 131
- US-A- 3 718 506
- US-A- 5 340 664
- US-A- 5 612 149
- PATENT ABSTRACTS OF JAPAN vol. 012, no. 174 (E-612), 24.Mai 1988 & JP 62 283570 A (MITSUBISHI HEAVY IND LTD), 9.Dezember 1987,
- PATENT ABSTRACTS OF JAPAN vol. 017, no. 340 (E-1389), 28.Juni 1993 & JP 05 047409 A (FUJI ELECTRIC CO LTD), 26.Februar 1993,
- PATENT ABSTRACTS OF JAPAN vol. 010, no. 121 (E-401), 7.Mai 1986 & JP 60 254568 A (FUJI DENKI SOUGOU KENKYUSHO:KK;OTHERS: 01), 16.Dezember 1985,
- PATENT ABSTRACTS OF JAPAN vol. 018, no. 372 (E-1577), 13.Juli 1994 & JP 06 103997 A (TONEN CORP;OTHERS: 01), 15.April 1994,

## Beschreibung

Die Erfindung bezieht sich auf eine Hochtemperatur-Brennstoffzellenanlage.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch die elektrochemische Verbindung von Wasserstoff (H₂) und Sauerstoff (O₂) zu Wasser entsteht mit hohem Wirkungsgrad elektrischer Strom. Dies geschieht, wenn als Brenngas reiner Wasserstoff (H₂) eingesetzt wird, ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Bei einer Hochtemperatur-Brennstoffzellenanlage (und auch ganz allgemein bei Brennstoffzellenanlagen) besteht für einen vielseitigen Einsatz der Anlage der Bedarf, die die Hochtemperatur-Brennstoffzellenanlage aufbauenden Komponenten möglichst kompakt (also platzsparend, funktionell bei möglichst geringer Anzahl der Komponenten, leicht zugänglich bei auftretenden Störungen, usw.) in der Hochtemperatur-Brennstoffzellenanlage zu integrieren. Als wesentlichen Bestandteil enthält die Hochtemperatur-Brennstoffzellenanlage einen Hochtemperatur-Brennstoffzellenstapel mit einer Anzahl von Hochtemperatur-Brennstoffzellen (beispielsweise über 50 Hochtemperatur-Brennstoffzellen) .

Der Hochtemperatur-Brennstoffzellenstapel hat eine Betriebstemperatur von über 600 °C und unterliegt hohen Anforderungen bezüglich der Erwärmung seiner für den Betrieb erforderlichen Betriebsmittel. Dazu muß gewährleistet sein, daß die die Hochtemperatur-Brennstoffzellenanlage zusammensetzenden Komponenten entsprechend wärmeisoliert sind (d.h. daß möglichst wenig Wärmeenergie aus der Hochtemperatur-Brennstoffzellenanlage an die Umgebung abgegeben wird). Außerdem sollte die beim Betrieb der Hochtemperatur-Brennstoffzellenanlage anfallende Abwärme für eine Erwärmung der Betriebsmittel des Hochtemperatur-Brennstoffzellenstapels verwendet werden.

Bei bekannten Hochtemperatur-Brennstoffzellenanlagen werden die Betriebsmittel des Hochtemperatur-Brennstoffzellenstapels teilweise elektrisch erwärmt. Außerdem werden teilweise auch die Abgase des Hochtemperatur-Brennstoffzellenstapels zum Erwärmen der Betriebsmittel des Hochtemperatur-Brennstoffzellenstapels verwendet. Beim Verwenden der Abgase zum Erwärmen ergeben sich in der Regel aufwendige Aufbauten für die Hochtemperatur-Brennstoffzellenanlage. Die Abgase müssen größtenteils über besondere Zuführungsleitungen speziellen Wärmetauschern zugeführt werden, wodurch der apparative Aufwand wesentlich vergrößert wird. Diese aufwendigen Hochtemperatur-Brennstoffzellenanlagen sind schlecht zugänglich, wenn einzelne Komponenten der Hochtemperatur-Brennstoffzellenanlage defekt sind. Insbesondere bei einer defekten Hochtemperatur-Brennstoffzelle des Hochtemperatur-Brennstoffzellenstapels muß gewährleistet sein, daß der Hochtemperatur-Brennstoffzellenstapel für eine zügige Reparatur einfach zu erreichen ist.

Aus der DE 195 48 297 A1 ist eine Brennstoffzellenanordnung bekannt, bei der ein Brennstoffzellenstapel von einem Gasraum umgeben ist. Im Gasraum ist ein Wärmetauscher angeordnet, über den das dem Brennstoffzellenstapel zugeführte Brenngas vorgewärmt wird. Die Erwärmung erfolgt durch Wärmetausch mit einer im Gasraum umgewälzten Abluft. Die Brenngasführung erfolgt hierbei über ein Leitungssystem. Zum Umwälzen der Abluft und zum Zuführen von Frischluft zum Brennstoffzellenstapel sind aufwendige Aufbauten auf dem Brennstoffzellenstapel vorgesehen.

Aus der DE 43 39 405 C1 ist eine Brennstoffzellenanlage zu entnehmen, bestehend aus einem Brennstoffzellenstapel, ein diesen umgebendes zylindrisches Gehäuse mit dazwischen liegendem Abgasraum. Das Gehäuse weist Gaszufuhr und -abfuhrstutzen auf. Der Brennstoffzellenstapel wird über Stege in dem Gehäuse gehalten.

In der US 5,612,149 ist ein in einem Gehäuse angeordneter Brennstoffzellenstapel beschrieben, an dem seitlich ein Wärmetauscher angeordnet ist. Über diesen wird dem Brennstoffzellenstapel Luft zugeführt und dabei vorgewärmt. Nach Verlassen des Brennstoffzellenstapels wird die Abluft in einem zwischen Brennstoffzellenstapel und Gehäuse gebildeten Abgasraum dem Wärmetauscher zum Erwärmen der Frischluft zugeführt.

Auch aus der WO 96/20506 ist zu entnehmen, die Luft in einem Gasraum zwischen Brennstoffzellenstapel und Gehäuse umzuwälzen und in diesem Gasraum einen Wärmetauscher anzuordnen. Jedoch sind hierbei die einzelnen Einbauten und insbesondere der Brennstoffzellenstapel für Revisionsarbeiten nicht ohne weiteres zugänglich.

Aufgabe der Erfindung ist es, eine Hochtemperatur-Brennstoffzellenanlage anzugeben, bei der die Betriebsmittel mit gutem Wirkungsgrad von den Abgasen aufgewärmt werden und wobei dennoch ein kompakter Aufbau gewährleistet ist.

Bei einer Hochtemperatur-Brennstoffzellenanlage mit wenigstens einem Hochtemperatur-Brennstoffzellenstapel ist gemäß der Erfindung der Hochtemperatur-Brennstoffzellenstapel in einem vorgegebenen Abstand wenigstens teilweise von einer Außenwand umgeben. Zwischen dem Hochtemperatur-Brennstoffzellenstapel und der Außenwand ist mindestens ein erster Abgasraum gebildet, durch den ein Abgas aus dem dem Hochtemperatur-Brennstoffzellenstapel nach außen abgeleitet wird. Im ersten Abgasraum ist ein Wärmetauscher für ein Betriebsmittel des Hochtemperatur-Brennstoffzellenstapels angeordnet. Zugleich ist zwischen dem Hochtemperatur-Brennstoffzellenstapel und der Außenwand wenigstens eine Trennwand angeordnet, die den ersten Abgasraum von einem zweiten Abgasraum trennt.

Bei dieser Hochtemperatur-Brennstoffzellenanlage umgeben die beiden Abgasräume wenigstens teilweise den Hochtemperatur-Brennstoffzellenstapel. Die Abgase werden ohne zusätzliche Abführungsleitungen aus dem Hochtemperatur-Brennstoffzellenstapel direkt in den jeweiligen Abgasraum eingespeist. Das eine Abgas des Hochtemperatur-Brennstoffzellenstapels umströmt im ersten Abgasraum den Wärmetauscher für das Betriebsmittel des Hochtemperatur-Brennstoffzellenstapels (der Wärmetauscher ist hier eine Zuführungsleitung für das Betriebsmittel) und erwärmt das Betriebsmittel. Da zwei Abgase, nämlich das Kathodenabgas und das Anodenabgas, aus dem Hochtemperatur-Brennstoffzellenstapel abgeführt werden müssen, werden bevorzugt beide Abgase zum Erwärmen der Betriebsmittel des Hochtemperatur-Brennstoffzellenstapels verwendet, wobei diese Abgase räumlich getrennt geführt werden. Es werden somit keine zusätzlichen Komponenten zum Erwärmen des Betriebsmittels benötigt. Auch Leitungen zum Abführen der Abgase aus der Hochtemperatur-Brennstoffzellenanlage (die innerhalb der Anlage angeordnet sind) werden praktisch nicht benötigt. Die Anzahl der in der Hochtemperatur-Brennstoffzellenanlage benötigten Komponenten kann somit auf ein Minimum reduziert werden. Dadurch ist auch bei einer notwendigen Reparatur des Brennstoffzellenstapels ein einfacherer Zugriff auf denselbigen gegeben. Die Hochtemperatur-Brennstoffzellenanlage gewährleistet mit gutem Wirkungsgrad eine Erwärmung der Betriebsmittel, wobei dennoch ein kompakter Aufbau gegeben ist.

Insbesondere kann der Hochtemperatur-Brennstoffzellenstapel in einem vorgegebenen Abstand wenigstens teilweise von einer Zwischenwand umgeben sein. Der erste Abgasraum ist dann zwischen der Zwischenwand und der Außenwand angeordnet. Die Zwischenwand dient neben der Außenwand (falls sie z.B. auf ihrer Innenseite verspiegelt und/oder auf andere Weise mit einer thermisch isolierenden Auskleidung versehen ist) als zusätzliche Wärmeisolierung, um den Verlust an Wärmeenergie im Hochtemperatur-Brennstoffzellenstapel möglicht gering zu halten.

In einer weiteren Ausgestaltung ist wenigstens eine Öffnung in der Trennwand mit einem Durchmesser von angenähert 1 mm vorgesehen. Durch diese Öffnungen können geringe Mengen an Abgas zwischen den beiden Abgasräumen ausgetauscht werden. Infolge des Austausches kommt es in der Umgebung der Trennwand zu einer Reaktion zwischen dem Anoden- und dem Kathodenabgas, wodurch zusätzlich Wärmeenergie zum Erwärmen der Betriebsmittel freigesetzt wird. Durch die Öffnungen kann außerdem ein Druckausgleich zwischen den beiden Abgasräumen erfolgen, der unerwünschte Differenzdrücke ausgleicht. Die Öffnungen weisen nur einen kleinen Durchmesser auf, da es andernfalls zu einer unkontrollierbaren Reaktion zwischen den Abgasen und einen damit verbundenen Ausfall der gesamten Hochtemperatur-Brennstoffzellenanlage kommen kann.

Vorzugsweise besitzt die Außenwand eine thermisch isolierende Auskleidung, die bevorzugt auf ihrer Innenseite angebracht ist, wo sie auch als Halterung und/oder Dichtmaterial für die Trennwände dienen kann. Durch diese thermische Isolierung ist gewährleistet, daß die Energie der Abwärme des Hochtemperatur-Brennstoffzellenstapels weitgehend innerhalb der Hochtemperatur-Brennstoffzellenanlage zurückgehalten wird und zum Erwärmen der Betriebsmittel verwendet wird. Außerdem wird zugleich die Wärmebelastung der Außenwand verringert.

Insbesondere können die Querschnitte der Außen- und Zwischenwand kreisförmig sein. Diese Querschnittsform der Wände erweist sich aus wärmetechnischen Gründen als besonders günstig.

In einer weiteren Ausgestaltung sind die Wärmetauscher mit Abstandshaltern an der Außenwand befestigt. Dadurch ist gewährleistet, daß weitgehend die gesamte Oberfläche der Wärmetauscher zum Erwärmen der Betriebsmittel zur Verfügung steht.

Vorzugsweise ist der Hochtemperatur-Brennstoffzellenstapel auf einer Bodenplatte angeordnet, wobei die Bodenplatte mit Hilfe von an der Außenwand befestigten Führungspratzen positionierbar ist. Beim Auftreten eines Defekts im Hochtemperatur-Brennstoffzellenstapel ist dieser nun auf eine einfache Weise zugänglich (d.h. er kann auf einfache Weise aus der Hochtemperatur-Brennstoffzellenanlage herausgeschoben werden).

Weitere vorteilhafte Ausgestaltungen sind in den Unteransprüchen beschrieben.

Zum besseren Verständnis der Erfindung und ihrer Weiterbildungen werden mehrere Ausführungsbeispiele anhand zweier Figuren erläutert.

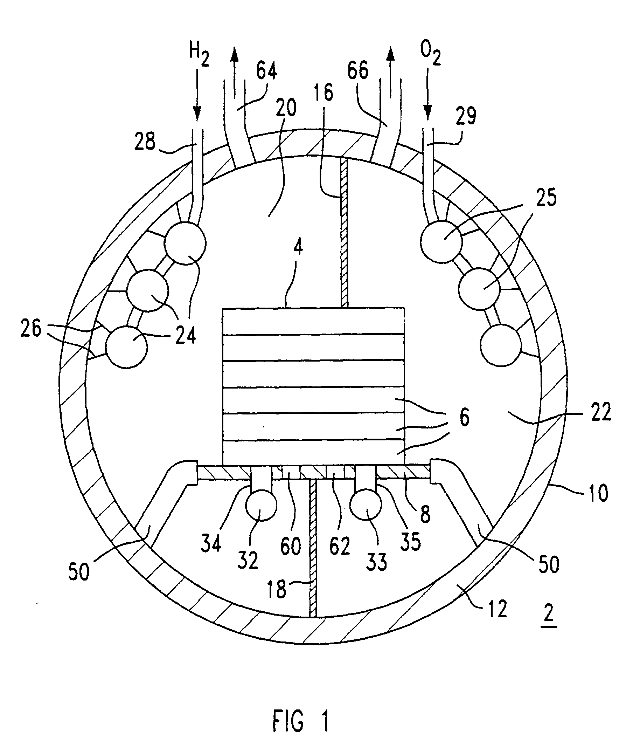

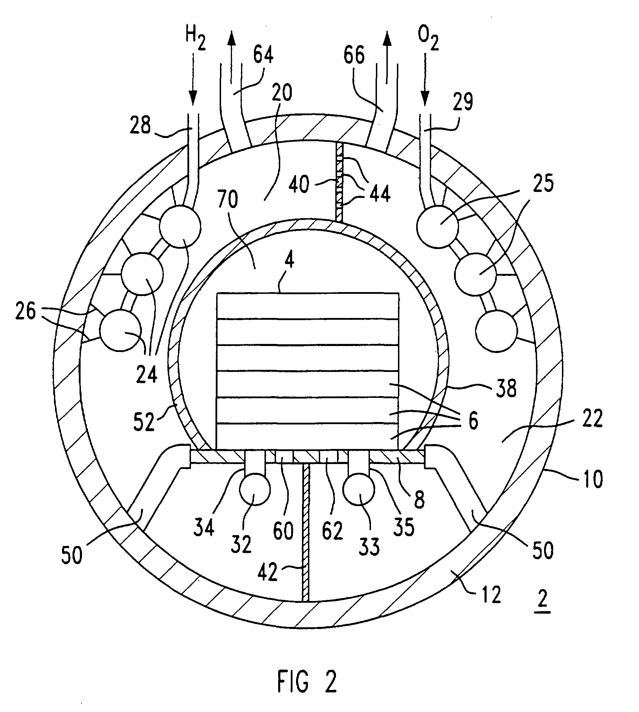

- Die Figuren 1 und 2: zeigen jeweils einen Ausschnitt aus einer Hochtemperatur-Brennstoffzellenanlage in schematischer Darstellung.

In Figur 1 erkennt man einen Ausschnitt aus einer Hochtemperatur-Brennstoffzellenanlage 2. Die Hochtemperatur-Brennstoffzellenanlage 2 enthält einen Hochtemperatur-Brennstoffzellenstapel 4, der sich aus einer Mehrzahl von Hochtemperatur-Brennstoffzellen 6 zusammensetzt. Der Hochtemperatur-Brennstoffzellenstapel 4 ist auf einer Grundplatte 8 angeordnet. Die Grundplatte 8 kann aber auch bereits Teil des Hochtemperatur-Brennstoffzellenstapels 4 sein.

Der Hochtemperatur-Brennstoffzellenstapel 4 ist in einem vorgegebenen Abstand von einer Außenwand 10 umgeben, die auf ihrer Innenseite mit einer wärmeisolierenden Schicht 12 versehen ist. Die Außenwand 10 hat in diesem Ausführungsbeispiel einen kreisförmigen Querschnitt und bildet praktisch ein zylindrisches Rohr, das an beiden Enden von einer (nicht dargestellten) Deckplatte verschlossen ist. Die Hochtemperatur-Brennstoffzellenanlage 2 ist etwa 1 m hoch (die Höhe entspricht dem Durchmesser des kreisförmigen Querschnitts) und besitzt eine Länge von ungefähr 2,5 m. In einem nicht weiter dargestellten Ausführungsbeispiel hat die Außenwand einen rechtwinkligen Querschnitt. Der Hochtemperatur-Brennstoffzellenstapel kann dann unmittelbar auf dem Boden, d.h. auf dem Bodenabschnitt der rechtwinklig verlaufenden Wand angeordnet sein (der Hochtemperatur-Brennstoffzellenstapel hat beim rechtwinkligen Querschnitt nicht mehr auf allen Seiten einen Abstand von der Außenwand).

Zwischen dem Hochtemperatur-Brennstoffzellenstapel 4 und der Außenwand 10 ist eine Trennwand 16 vorgesehen, die von der Oberseite des Hochtemperatur-Brennstoffzellenstapel 4 zur Außenwand 10 (im oberen Bereich) verläuft. Eine weitere Trennwand 18 ist zwischen der Grundplatte 8 des Hochtemperatur-Brennstoffzellenstapels 4 und der Außenwand 10 angeordnet, wobei die Trennwand 18 von der Unterseite der Grundplatte 8 zur Außenwand 10 (im unteren Bereich) verläuft. Die beiden Trennwände 16 und 18 teilen den durch die Außenwand 10 und den Hochtemperatur-Brennstoffzellenstapel 4 begrenzten Innenraum in einen ersten Abgasraum 20 und einen zweiten Abgasraum 22 auf.

Im ersten Abgasraum 20 ist ein Wärmetauscher 24 (der beispielsweise aus mehreren nebeneinander verlaufenden rohrförmigen Abschnitten besteht, die vorzugsweise schraubenlinienartig ausgebidet sind) für ein Betriebsmittel (beispielsweise Wasserstoff (H₂)) des Hochtemperatur-Brennstoffzellenstapels 4 angeordnet. Der Wärmetauscher 24 ist mit Abstandhaltern 26 an der Außenwand 10 befestigt und verläuft angenähert über die gesamte Länge der Hochtemperatur-Brennstoffzellenanlage 2. Der Wärmetauscher 24 wird über eine Zuführung 28 mit dem Betriebsmittel versorgt. Über eine nicht weiter dargestellte Leitung wird das Betriebsmittel aus dem Wärmetauscher 24 einer unterhalb des Hochtemperatur-Brennstoffzellenstapel 4 angeordneten Verteilerleitung 32 zugeführt. Aus der Verteilerleitung 32 wird das Betriebsmittel über eine Zuführung 34 in den Hochtemperatur-Brennstoffzellenstapel 4 eingespeist.

Im zweiten Abgasraum 22 ist ein weiterer Wärmetauscher 25 für ein weiteres Betriebsmittel (hier Sauerstoff (O₂)) des Hochtemperatur-Brennstoffzellenstapels 4 angeordnet. Der Wärmetauscher 25 ist mit Abstandhaltern 26 an der Außenwand 10 befestigt und verläuft angenähert über die gesamte Länge der Hochtemperatur-Brennstoffzellenanlage 2. Der Wärmetauscher 25 wird über eine Zuführung 29 mit dem Sauerstoff (O₂) versorgt. Über eine nicht weiter dargestellte Leitung wird das Betriebsmittel aus dem Wärmetauscher 25 einer unterhalb des Hochtemperatur-Brennstoffzellenstapel 4 angeordneten Verteilerleitung 33 zugeführt. Aus der Verteilerleitung 33 wird das Betriebsmittel über eine Zuführung 35 in den Hochtemperatur-Brennstoffzellenstapel 4 eingespeist. Werden mehrere Hochtemperatur-Brennstoffzellenstapel 4 auf der Grundplatte 8 in Längsrichtung der Hochtemperatur-Brennstoffzellenanlage 2 hintereinander angeordnet, so können diese ebenfalls über die Verteilerleitung 33 bzw. über die Verteilerleitung 32 mit den Betriebsmitteln gespeist werden.

Das wasserstoffhaltige und das sauerstoffhaltige Abgas des Hochtemperatur-Brennstoffzellenstapel 4 wird über die Durchführungen 60 bzw. 62 in den ersten bzw. zweiten Abgasraum 20,22 geleitet. In den Abgasräumen 20,22 umströmen die heißen Abgase (mit einer Temperatur von wenigstens 600 °C) des Hochtemperatur-Brennstoffzellenstapels 4 die Wärmetauscher 24,25 und die Verteilerleitungen 32,33 und erwärmen die Betriebsmittel (und zwar den Wasserstoff (H₂) im Wärmetauscher 24 und in der Verteilerleitung 32 bzw. den Sauerstoff (O₂) im Wärmetauscher 25 und in der Verteilerleitung 33). Über die im oberen Bereich der Außenwand 10 angeordneten Abführungen 64,66 werden die Abgase (nachdem sie einen Anteil ihrer Wärmeenergie abgegeben haben) aus der Hochtemperatur-Brennstoffzellenanlage 2 abgeführt.

Zum Erwärmen der Betriebsmittel werden also Wärmetauscher 24,25 (beispielsweise Rohrleitungen aus einem wärmeleitenden Werkstoff) verwendet, die bereits zum Bereitstellen der Betriebsmittel für den Hochtemperatur-Brennstoffzellenstapel 4 vorgesehen sind (und nicht gesondert zum Erwärmen bereitgestellt werden müssen). Es werden auch keine zusätzlichen Räumlichkeiten für den Erwärmungsprozeß benötigt.

Die Grundplatte 8 (mit dem auf ihr angeordneten Hochtemperatur-Brennstoffzellenstapel 4) ist zum einfachen Entfernen aus der Hochtemperatur-Brennstoffzellenanlage 2 in vier Führungspratzen 50 schienenartig gelagert, die im unteren Bereich auf der Innenseite der Außenwand 10 befestigt sind. Die Führungspratzen 50 sind der einzige thermische Kontakt (Wärmebrücken) des Hochtemperatur-Brennstoffzellenstapels 4 mit der Außenwand 10.

Die Hochtemperatur-Brennstoffzellenanlage 2 gewährleistet mit gutem Wirkungsgrad eine Erwärmung des Betriebsmittels, wobei dennoch ein kompakter Aufbau gegeben ist.

Die in Figur 2 dargestellte Hochtemperatur-Brennstoffzellenanlage 2 weist zusätzlich zu Figur 1 eine Zwischenwand 38 auf, die teilweise den Hochtemperatur-Brennstoffzellenstapel 4 in einem vorgegebenen Abstand umgibt (zusammen mit der Grundplatte 8 umgibt sie diesen vollständig). Die Zwischenwand 38 ist kreisförmig ausgeführt und auf ihrer Innenseite mit einer thermisch isolierenden Schicht 52 versehen. Der zwischen dem Hochtemperatur-Brennstoffzellenstapel 4 und der Zwischenwand 38 gebidete Innenraum 70 enthält ein Schutzgas (beispielsweise Stickstoff (N₂)).

In diesem Ausführungsbeispiel ist der erste und der zweite Abgasraum 20,22 zwischen der Zwischenwand 38 und der Außenwand 10 gebildet, wobei diese durch die beiden Trennwände 40,42 voneinander getrennt sind.

In der Trennwand 40 sind kreisförmige Öffnungen 44 vorgesehen, durch welche in kleinen Mengen ein Austausch von wasserstoffhaltigem und sauerstoffhaltigem Abgas zwischen dem ersten und dem zweiten Abgasraum 20,22 erfolgt. Die beiden Abgase reagieren in der Nähe der Öffnungen 44 der Trennwand 40 miteinander und setzen weitere Wärmeenergie (neben der bereits in den Abgasen enthaltenden Wärmeenergie) zum Erwärmen der Betriebsmittel frei. Zugleich werden Druckdifferenzen zwischen den beiden Abgasräumen 20,22 ausgeglichen.

Es ist nicht notwendig, allein mit dem wasserstoffhaltigen Abgas das wasserstoffhaltige Betriebsmittel (und mit dem sauerstoffhaltigen Abgas das sauerstoffhaltige Betriebsmittel) zu erwärmen. Im Fall von Undichtigkeiten können dann keine explosiven Gemische auftreten. Es könnten aber auch mit dem wasserstoffhaltigen Abgas das sauerstoffhaltige Betriebsmittel (und mit dem sauerstoffhaltigen Abgas das wasserstoffhaltige Betriebsmittel) erwärmt werden.

## Patentansprüche

1. Hochtemperatur-Brennstoffzellenanlage (2) mit wenigstens einem Hochtemperatur-Brennstoffzellenstapel (4), der in einem vorgegebenen Abstand wenigstens teilweise von einer Außenwand (10) umgeben ist, so daß zwischen dem Hochtemperatur-Brennstoffzellenstapel (4) und der Außenwand (10) mindestens ein erster Abgasraum (20) gebildet ist, durch den Abgas aus dem Hochtemperatur-Brennstoffzellenstapel (4) nach außen abführbar ist, und daß im ersten Abgasraum (20) ein Wärmetauscher (24) für ein Betriebsmittel des Hochtemperatur-Brennstoffzellenstapels (4) angeordnet ist,
**dadurch gekennzeichnet**, daß zwischen dem Hochtemperatur-Brennstoffzellenstapel (4) und der Außenwand (10) wenigstens eine Trennwand (16,18) angeordnet ist, die den ersten Abgasraum (20) von einem zweiten Abgasraum (22) trennt.

2. Hochtemperatur-Brennstoffzellenanlage (2) nach Anspruch 1,
**dadurch gekennzeichnet**, daß der Hochtemperatur-Brennstoffzellenstapel (4) in einem vorgegebenen Abstand wenigstens teilweise von einer Zwischenwand (38) umgeben ist, so daß zwischen der Zwischenwand (38) und der Außenwand (10) der erste Abgasraum (20) gebildet ist.

3. Hochtemperatur-Brennstoffzellenanlage (2) nach Anspruch 3,
**dadurch gekennzeichnet**, daß zwischen der Zwischenwand (38) und der Außenwand (10) wenigstens eine Trennwand (40,42) angeordnet ist, die den ersten Abgasraum (20) vom zweiten Abgasraum (22) trennt.

4. Hochtemperatur-Brennstoffzellenanlage (2) nach einem der vorhergehenden Ansprüche
**dadurch gekennzeichnet,** daß im zweiten Abgasraum (22) ein weiterer Wärmetauscher (25) für ein weiteres Betriebsmittel des Hochtemperatur-Brennstoffzellenstapels (4) angeordnet ist.

5. Hochtemperatur-Brennstoffzellenanlage (2) nach einem der vorhergehenden Ansprüche
**dadurch gekennzeichnet**, daß einer der Abgasräume (20,22) mit dem Anodenabgas des Hochtemperatur-Brennstoffzellenstapels (4) und der andere der Abgasräume (20,22) mit dem Kathodenabgas beaufschlagt ist.

6. Hochtemperatur-Brennstoffzellenanlage (2) nach einem der vorhergehenden Ansprüche,
**dadurch gekennzeichnet**, daß wenigstens eine Öffnung (44) in der Trennwand (16,18,40,42) vorgesehen ist.

7. Hochtemperatur-Brennstoffzellenanlage (2) nach Anspruch 6,
**dadurch gekennzeichnet**, daß die Öffnung (44) kreisförmig ist und einen Durchmesser von etwa 1 mm besitzt.

8. Hochtemperatur-Brennstoffzellenanlage (2) nach einem der vorhergehenden Ansprüche,
**dadurch gekennzeichnet**, daß der Querschnitt der Außenwand (10) kreisförmig ist.

9. Hochtemperatur-Brennstoffzellenanlage (2) nach einem der Ansprüche 2 bis 8,
**dadurch gekennzeichnet,** daß der Querschnitt der Zwischenwand (38) kreisförmig ist.

10. Hochtemperatur-Brennstoffzellenanlage (2) nach einem der vorhergehenden Ansprüche,
**dadurch gekennzeichnet**, daß die Außenwand (10) auf ihrer Innenseite eine thermisch isolierende Auskleidung (12) aufweist.

11. Hochtemperatur-Brennstoffzellenanlage (2) nach einem der Ansprüche 2 bis 10,
**dadurch gekennzeichnet,** daß die Zwischenwand (38) eine thermisch isolierende Auskleidung (52) aufweist.

12. Hochtemperatur-Brennstoffzellenanlage (2) nach einem der vorhergehenden Ansprüche,
**dadurch gekennzeichnet**, daß die Wärmetauscher (24,25) mit Abstandshaltern (26) an der Außenwand (10) befestigt sind.

13. Hochtemperatur-Brennstoffzellenanlage (2) nach einem der vorhergehenden Ansprüche,
**dadurch gekennzeichnet**, daß der Hochtemperatur-Brennstoffzellenstapel (4) auf einer Grundplatte (8) angeordnet ist und die Grundplatte (8) mit Hilfe von an der Außenwand (10) befestigten Führungspratzen (50) positionierbar ist.

## Claims

1. High-temperature fuel cell installation (2), with at least one high-temperature fuel cell stack (4), which is surrounded at a specified distance at least in part by an outer wall (10), so that at least a first waste gas space (20) is formed between the high-temperature fuel cell stack (4) and the outer wall (10), through which space waste gas is dischargeable outwards from the high-temperature fuel cell stack (4), and that in the first waste gas space (20) a heat exchanger (24) is arranged for an operating material of the high-temperature fuel cell stack (4),
characterized in that disposed between the high-temperature fuel cell stack (4) and the outer wall (10) is at least one dividing wall (16, 18), which separates the first waste gas space (20) from a second waste gas space (22).

2. High-temperature fuel cell installation (2) according to claim 1,
characterized in that the high-temperature fuel cell stack (4) is surrounded at a specified distance at least in part by an intermediate wall (38), so that the first waste gas space (20) is formed between the intermediate wall (38) and the outer wall (10).

3. High-temperature fuel cell installation according to claim 3,
characterized in that disposed between the intermediate wall (38) and the outer wall (10) is at least one dividing wall (40, 42), which separates the first waste gas space (20) from the second waste gas space (22).

4. High-temperature fuel cell installation (2) according to one of the preceding claims,
characterized in that disposed in the second waste gas space (22) is a further heat exchanger (25) for a further operating material of the high-temperature fuel cell stack (4).

5. High-temperature fuel cell installation (2) according to one of the preceding claims,
characterized in that one of the waste gas spaces (20, 22) is impinged on by the anode waste gas of the high-temperature fuel cell stack (4) and the other of the waste gas spaces (20, 22) by the cathode waste gas.

6. High-temperature fuel cell installation (2) according to one of the preceding claims,
characterized in that at least one opening (44) is provided in the dividing wall (16, 18, 40, 42).

7. High-temperature fuel cell installation (2) according to claim 6,
characterized in that the opening (44) is circular and has a diameter of approx. 1 mm.

8. High-temperature fuel cell installation (2) according to one of the preceding claims,
characterized in that the cross-section of the outer wall (10) is circular.

9. High-temperature fuel cell installation (2) according to one of claims 2 to 8,
characterized in that the cross-section of the intermediate wall (38) is circular.

10. High-temperature fuel cell installation (2) according to one of the preceding claims,
characterized in that the outer wall (10) has a thermally insulating lining (12) on its inside.

11. High-temperature fuel cell installation (2) according to one of claims 2 to 10,
characterized in that the intermediate wall (38) has a thermally insulating lining (52).

12. High-temperature fuel cell installation (2) according to one of the preceding claims,
characterized in that the heat exchangers (24, 25) are fastened to the outer wall (10) by spacers (26).

13. High-temperature fuel cell installation (2) according to one of the preceding claims,
characterized in that the high-temperature fuel cell stack (4) is arranged on a base plate (8) and the base plate (8) is positionable with the aid of the guide brackets (50) fastened to the outer wall (10).

## Revendications

1. Installation (2) de piles à combustible fonctionnant à haute température comprenant au moins un empilement (4) de piles à combustible fonctionnant à haute température, qui est entourée à une distance prescrite au moins partiellement d'une paroi (10) extérieure de manière à former entre l'empilement (4) de piles à combustible fonctionnant à haute température et la paroi (10) extérieure au moins une première chambre (20) pour l'effluent gazeux par laquelle de l'effluent gazeux peut être évacué de l'empilement (4) de piles à combustible fonctionnant à haute température à l'extérieur et en ce que, dans la première chambre (20) pour l'effluent gazeux, est monté un échangeur de chaleur (24) pour un fluide de fonctionnement de l'empilement (4) de piles à combustible fonctionnant à haute température,
caractérisée en ce qu'il est monté, entre l'empilement (4) de piles à combustible fonctionnant à haute température et la paroi (10) extérieure, au moins une cloison (16, 18) qui sépare la première chambre (20) pour l'effluent gazeux d'une deuxième chambre (22) pour l'effluent gazeux.

2. Installation (2) de piles à combustible fonctionnant à haute température suivant la revendication 1,
caractérisée en ce que l'empilement (4) de piles à combustible fonctionnant à haute température est entouré à une distance prescrite au moins partiellement d'une paroi (38) intermédiaire, de manière à former entre la paroi (38) intermédiaire et la paroi (10) extérieure la première chambre (20) pour l'effluent gazeux.

3. Installation (2) de piles à combustible fonctionnant à haute température suivant la revendication 2,
caractérisée en ce qu'il est monté entre la paroi (38) intermédiaire et la paroi (10) extérieure au moins une cloison (40, 42) qui sépare la première chambre (20) pour l'effluent gazeux de la deuxième chambre (22) pour l'effluent gazeux.

4. Installation (2) de piles à combustible fonctionnant à haute température suivant l'une quelconque des revendications précédentes,
caractérisée en ce qu'il est monté dans la deuxième chambre (22) pour l'effluent gazeux un autre échangeur de chaleur pour un autre fluide de fonctionnement de l'empilement (4) de piles à combustible fonctionnant à haute température.

5. Installation (2) de piles à combustible fonctionnant à haute température suivant l'une quelconque des revendications précédentes,
caractérisée en ce qu'il est envoyé à l'une des chambres (20, 22) pour l'effluent gazeux, l'effluent gazeux anodique de l'empilement (4) de piles à combustible fonctionnant à haute température et à l'autre des chambres (20, 22) pour l'effluent gazeux, l'effluent gazeux cathodique.

6. Installation (2) de piles à combustible fonctionnant à haute température suivant l'une quelconque des revendications précédentes,
caractérisée en ce qu'il est prévu au moins un orifice (44) dans la cloison (16, 18, 40, 42).

7. Installation (2) de piles à combustible fonctionnant à haute température suivant la revendication 6,
caractérisée en ce que l'orifice (44) est circulaire et a un diamètre d'environ 1 mm.

8. Installation (2) de piles à combustible fonctionnant à haute température suivant l'une quelconque des revendications précédentes,
caractérisée en ce que la section transversale de la paroi (10) extérieure est circulaire.

9. Installation (2) de piles à combustible fonctionnant à haute température suivant l'une des revendications 2 à 8,
caractérisée en ce que la section transversale de la paroi (38) intermédiaire est circulaire.

10. Installation (2) de piles à combustible fonctionnant à haute température suivant quelconque l'une des revendications précédentes,
caractérisée en ce que la paroi (10) extérieure comporte sur sa face intérieure un revêtement (12) isolant du point de vue thermique.

11. Installation (2) de piles à combustible fonctionnant à haute température suivant l'une des revendications 2 à 10,
caractérisée en ce que la cloison (38) intermédiaire comporte un revêtement (52) isolant du point de vue thermique.

12. Installation (2) de piles à combustible fonctionnant à haute température suivant l'une des revendications précédentes,
caractérisée en ce que les échangeurs de chaleur (24, 25) sont fixés à la paroi (10) extérieure par des entretoises (26).

13. Installation (2) de piles à combustible fonctionnant à haute température suivant l'une des revendications précédentes,
caractérisée en ce que l'empilement (4) de piles à combustible fonctionnant à haute température est monté sur une embase (8) et l'embase (8) peut être mise en position par des griffes (50) de guidage fixées à la paroi (10) extérieure.
